# EUROPEAN PATENT APPLICATION

(11) **EP 4 843 652 A1**
(43) Date of publication of application: **25.11.2026**
(21) Application number: 26739145.6
(22) Date of filing: 09.03.2026
(51) Int. Cl.: B01D 39/16, B01D 53/22, B01D 69/02, B01D 71/32, B01D 71/36

(54) **AIR FILTER FILTRATION MEDIUM**

(30) Priority: 31.03.2025 JP 2025060111
(71) Applicant: Daikin Industries, Ltd., Osaka-shi, Osaka 530-0001 (JP)
(72) Inventor: KANDA, Toshihiro, Osaka-shi, Osaka 530-001 (JP); INUI, Kunihiko, Osaka-shi, Osaka 530-001 (JP); NAKAMURA, Minami, Osaka-shi, Osaka 530-001 (JP); KIMURA, Takashi, Osaka-shi, Osaka 530-001 (JP)
(74) Representative: Hoffmann Eitle
(86) International application number: PCT/JP2026/008995
(87) International publication number: WO 2026/211188

(57) **Abstract**

Provided is an air filter medium in which a low pressure loss can be achieved while a good collection efficiency is maintained. An air filter medium (30a, 30b, 30c, 30d) includes a porous membrane (31, 31a, 31b) having fibers, wherein a fiber density/geometric mean fiber diameter that is a ratio of a fiber density in the porous membrane (31, 31a, 31b) to a geometric mean fiber diameter of the fibers in the porous membrane is 1.9 or more and 4.2 or less.

## Description

### Technical Field

The present disclosure relates to an air filter medium.

### Background Art

In the related art, air filter media formed of glass fibers have been widely used as air filter media that capture dust and the like contained in air, but have had a high pressure loss.

In contrast, for example, it has been proposed to obtain a polytetrafluoroethylene porous membrane having a high collection efficiency and a low pressure loss by devising the manufacturing conditions, as in the air filter medium described in Patent Literature 1 (Japanese Unexamined Patent Application Publication No. 10-030031).

### Summary of Invention

### Technical Problem

For air filter media, however, further improvement is desired in achieving a low pressure loss while maintaining a good collection efficiency.

### Solution to Problem

An air filter medium according to a first aspect is an air filter medium including a porous membrane having fibers, wherein a fiber density/geometric mean fiber diameter that is a ratio of a fiber density in the porous membrane to a geometric mean fiber diameter of the fibers in the porous membrane is 1.9 or more and 4.2 or less.

According to this air filter medium, a low pressure loss can be achieved while a good collection efficiency is maintained by decreasing the number of fibers used to collect one collection target.

An air filter medium according to a second aspect is the air filter medium according to the first aspect, wherein the geometric mean fiber diameter of the fibers in the porous membrane is 98 nm or more.

In this air filter medium, the structural strength of the filter medium is increased by increasing the fiber diameter of the porous membrane, and clogging of the filter medium can be suppressed because the interfiber distance tends to widen.

An air filter medium according to a third aspect is the air filter medium according to the first aspect or the second aspect, wherein the geometric mean fiber diameter of the fibers in the porous membrane is 199 nm or less.

In this air filter medium, a good collection efficiency can be achieved.

An air filter medium according to a fourth aspect is the air filter medium according to any one of the first aspect to the third aspect, wherein the fiber density in the porous membrane is 0.45 fibers/µm or less.

In this air filter medium, the pressure loss is easily reduced.

An air filter medium according to a fifth aspect is the air filter medium according to any one of the first aspect to the fourth aspect, wherein the fiber density in the porous membrane is 0.26 fibers/µm or more.

In this air filter medium, the collection efficiency is easily improved.

An air filter medium according to a sixth aspect is the air filter medium according to any one of the first aspect to the fifth aspect, wherein the porous membrane is a fluororesin porous membrane.

In this air filter medium, the chemical resistance can be improved.

An air filter medium according to a seventh aspect is the air filter medium according to the sixth aspect, wherein the fluororesin porous membrane includes a homo-PTFE and a modified PTFE.

In this air filter medium, a low pressure loss is easily achieved while a good collection efficiency is maintained.

An air filter medium according to an eighth aspect is the air filter medium according to the sixth aspect or the seventh aspect, wherein the fluororesin porous membrane has a PF value of 35 or more, the PF value being defined by formula PF value = {-log((100 - collection efficiency (%))/100)}/(pressure loss (Pa)/1000) using a pressure loss determined when air is passed at a flow rate of 5.3 cm/s and a collection efficiency for polyalphaolefin particles with a particle diameter of 0.1 µm determined when air containing the polyalphaolefin particles is passed at a flow rate of 5.3 cm/s.

In this air filter medium, a low pressure loss is easily achieved while a good collection efficiency is maintained for collection targets having a small particle diameter.

An air filter medium according to a ninth aspect is the air filter medium according to any one of the sixth aspect to the eighth aspect, wherein the geometric mean fiber diameter of the fibers in the fluororesin porous membrane is 117 nm or less.

In this air filter medium, a good collection efficiency can be achieved.

An air filter medium according to a tenth aspect is the air filter medium according to any one of the sixth aspect to the ninth aspect, wherein a filling factor in the fluororesin porous membrane is 1.4% or more and 4.0% or less.

In this air filter medium, the PF value is easily increased.

An air filter medium according to an eleventh aspect is the air filter medium according to any one of the sixth aspect to the tenth aspect, wherein a basis weight in the fluororesin porous membrane is 1.1 g/m² or more.

In this air filter medium, the collection efficiency is easily improved.

An air filter medium according to a twelfth aspect is the air filter medium according to any one of the sixth aspect to the eleventh aspect, wherein a thickness in the fluororesin porous membrane is 19 µm or more.

In this air filter medium, the collection efficiency is easily improved.

An air filter medium according to a thirteenth aspect is the air filter medium according to any one of the first aspect to the fifth aspect, wherein the porous membrane is a polyolefin porous membrane.

In this air filter medium, an environmental load on the earth can be reduced because a polyolefin including bonds having a weaker bonding force than carbon-fluorine bonds is used.

An air filter medium according to a fourteenth aspect is the air filter medium according to the thirteenth aspect, wherein the polyolefin porous membrane has a PF value of 32 or more, the PF value being defined by formula PF value = {-log((100 - collection efficiency (%))/100)}/(pressure loss (Pa)/1000) using a pressure loss determined when air is passed at a flow rate of 5.3 cm/s and a collection efficiency for polyalphaolefin particles with a particle diameter of 0.1 µm determined when air containing the polyalphaolefin particles is passed at a flow rate of 5.3 cm/s.

In this air filter medium, a low pressure loss is easily achieved while a good collection efficiency is maintained for collection targets having a small particle diameter.

An air filter medium according to a fifteenth aspect is the air filter medium according to the thirteenth aspect or the fourteenth aspect, wherein the geometric mean fiber diameter of the fibers in the polyolefin porous membrane is 120 nm or less.

In this air filter medium, a good collection efficiency can be achieved.

An air filter medium according to a sixteenth aspect is the air filter medium according to any one of the thirteenth aspect to the fifteenth aspect, wherein a filling factor in the polyolefin porous membrane is 4.0% or more and 8.0% or less.

In this air filter medium, the PF value is easily increased.

An air filter medium according to a seventeenth aspect is the air filter medium according to any one of the thirteenth aspect to the sixteenth aspect, wherein a basis weight in the polyolefin porous membrane is 0.8 g/m² or more.

In this air filter medium, the collection efficiency is easily improved.

An air filter medium according to an eighteenth aspect is the air filter medium according to any one of the thirteenth aspect to the seventeenth aspect, wherein a thickness in the polyolefin porous membrane is 11 µm or more.

In this air filter medium, the collection efficiency is easily improved.

### Brief Description of Drawings

[Fig. 1] Fig. 1 is a schematic cross-sectional view illustrating a layer structure of an air filter medium 30a.
[Fig. 2] Fig. 2 is a schematic cross-sectional view illustrating a layer structure of an air filter medium 30b.
[Fig. 3] Fig. 3 is a schematic cross-sectional view illustrating a layer structure of an air filter medium 30c.
[Fig. 4] Fig. 4 is a schematic cross-sectional view illustrating a layer structure of an air filter medium 30d.
[Fig. 5] Fig. 5 is an external perspective view of a filter pack.
[Fig. 6] Fig. 6 is an external perspective view of an air filter unit.
[Fig. 7] Fig. 7 is a graph of PF values for a particle diameter of 0.1 µm with respect to a fiber density/geometric mean fiber diameter of a porous membrane.

### Description of Embodiments

Hereinafter, an embodiment of an air filter medium will be described using examples.

### (1) Air filter medium

The air filter medium includes a porous membrane having fibers.

The air filter medium may be an air filter medium in which, for example, an air-permeable support member and the like described below are stacked in addition to the porous membrane.

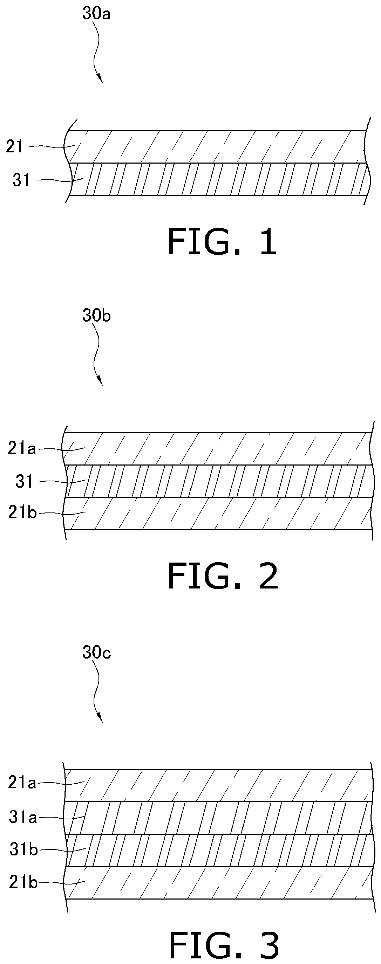

For example, as in an air filter medium 30a illustrated in Fig. 1, an air-permeable support member 21 and a porous membrane 31 may be stacked in order in an air flow direction. Herein, the porous membrane 31 may be disposed on an upstream side of air flow with respect to the air-permeable support member 21, or may be disposed on a downstream side of air flow with respect to the air-permeable support member 21.

For example, as in an air filter medium 30b illustrated in Fig. 2, an upstream air-permeable support member 21a, a porous membrane 31, and a downstream air-permeable support member 21b may be stacked in order in the air flow direction.

Alternatively, as in an air filter medium 30c illustrated in Fig. 3, an upstream air-permeable support member 21a, a first porous membrane 31a, a second porous membrane 31b, and a downstream air-permeable support member 21b may be stacked in order in the air flow direction.

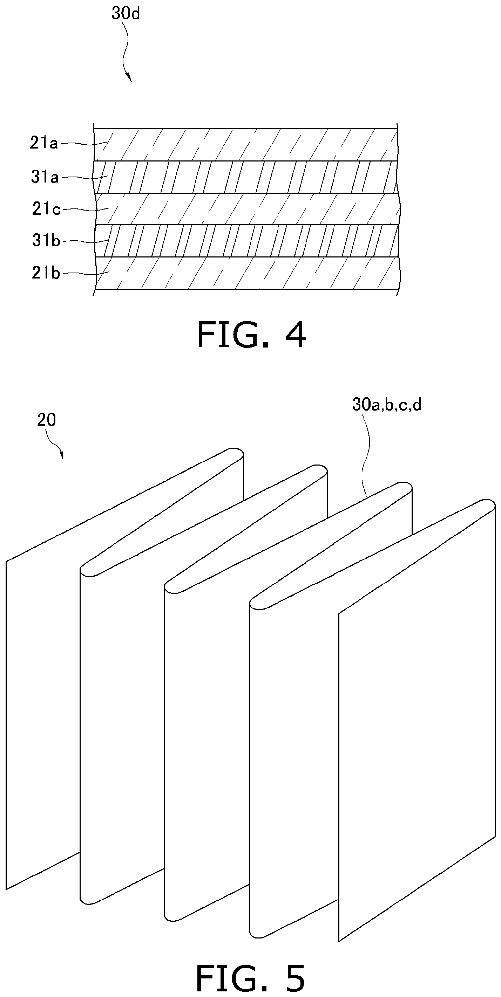

Alternatively, as in an air filter medium 30d illustrated in Fig. 4, an upstream air-permeable support member 21a, a first porous membrane 31a, an intermediate air-permeable support member 21c, a second porous membrane 31b, and a downstream air-permeable support member 21b may be stacked in order in the air flow direction.

On the upstream side of the porous membrane 31 or the first porous membrane 31a, a pre-collection layer that is a membrane having a lower pressure loss and a lower collection efficiency may be provided.

A manner of stacking these membranes and members and the like is not limited. The stacking may be bonding using an anchor effect by partial melting or melting of a hot-melt resin due to heating, bonding using a reactive adhesive or the like, or simple stacking.

In the air filter medium, the collection efficiency for polyalphaolefin (PAO) particles with a particle diameter of 0.1 µm determined when air containing the polyalphaolefin particles is passed at a flow rate of 5.3 cm/s is preferably 95.0% or more, more preferably 99.5% or more, and further preferably 99.95% or more.

The pressure loss determined when air is passed through the air filter medium at a flow rate of 5.3 cm/s is, for example, preferably less than 250 Pa, more preferably less than 200 Pa, and may be 30 Pa or more and 190 Pa or less.

### (2) Porous membrane

The air filter medium includes a porous membrane having fibers.

In the porous membrane, the fiber density/geometric mean fiber diameter that is a ratio of a fiber density to a geometric mean fiber diameter of the fibers is 1.9 or more and 4.2 or less. This reduces the pressure loss while suppressing a reduction in collection efficiency by reducing fibers that are less likely to contribute to collection of collection targets, which can increase the PF value. Although there is a general tendency that the PF value increases as the geometric mean fiber diameter decreases, use of the above parameter obtained by dividing the fiber density by the geometric mean fiber diameter suppresses an influence of the geometric mean fiber diameter of the fibers in the porous membrane on the PF value. The fiber density/geometric mean fiber diameter is more preferably 2.4 or more and 3.9 or less and further preferably 2.5 or more and 3.8 or less.

The geometric mean fiber diameter of the fibers in the porous membrane is preferably 98 nm or more and more preferably 110 nm or more. This can increase the structural strength of the porous membrane, and also suppress clogging of the air filter medium because the interfiber distance tends to widen in the porous membrane.

The geometric mean fiber diameter of the fibers in the porous membrane is preferably 199 nm or less. This easily increases the PF value of the porous membrane.

The geometric mean fiber diameter may be calculated as a geometric mean fiber diameter by randomly selecting 50 fibers from an image of a scanning electron micrograph.

The fiber density in the porous membrane is preferably 0.26 fibers/µm or more and more preferably 0.35 fibers/µm or more from the viewpoint of easily improving the collection efficiency. The fiber density in the porous membrane is preferably 0.45 fibers/µm or less from the viewpoint of reducing the pressure loss. The fiber density can be adjusted to be reduced by, for example, heating the obtained porous membrane at a predetermined temperature to remove some fibers. The fiber density can also be adjusted by adjusting a degree of generation of fibers by mixing, in a raw material for obtaining the porous membrane, a component that tends to produce fibers with a component that tends not to produce fibers.

The filling factor in the porous membrane is preferably 1.4% or more and more preferably 2.0% or more from the viewpoint of easily improving the collection efficiency. The filling factor in the porous membrane is preferably 8.0% or less from the viewpoint of reducing the pressure loss.

The basis weight in the porous membrane is preferably 0.80 g/m² or more from the viewpoint of easily improving the collection efficiency. The basis weight in the porous membrane is preferably 4.0 g/m² or less and more preferably 2.0 g/m² or less from the viewpoint of reducing the pressure loss.

The thickness in the porous membrane is preferably 11 µm or more from the viewpoint of easily improving the collection efficiency. The thickness in the porous membrane is preferably 150 µm or less, more preferably 100 µm or less, and further preferably 50 µm or less from the viewpoint of reducing the pressure loss.

For the porous membrane, the PF value defined by the following formula PF value = {-log((100 - collection efficiency (%))/100)}/(pressure loss (Pa)/1000) using a pressure loss determined when air is passed at a flow rate of 5.3 cm/s and a collection efficiency for polyalphaolefin particles with a particle diameter of 0.1 µm determined when air containing the polyalphaolefin particles is passed at a flow rate of 5.3 cm/s is 32 or more. In this porous membrane, a low pressure loss is easily achieved while a good collection efficiency is maintained for collection targets having a small particle diameter.

The pressure loss in the porous membrane is preferably 200 Pa or less, more preferably 170 Pa or less, and further preferably 150 Pa or less.

For the porous membrane, the collection efficiency for polyalphaolefin particles with a particle diameter of 0.1 µm determined when air containing the polyalphaolefin particles is passed at a flow rate of 5.3 cm/s is preferably 99% or more, more preferably 99.9% or more, and further preferably 99.95% or more. The collection efficiency and the penetration rate have a relationship of collection efficiency (%) = 100 (%) - penetration rate (%).

From the viewpoint of easily suppressing the clogging of the porous membrane by keeping a large amount of voids in the porous membrane, the thickness in the porous membrane is preferably 12 µm or more and the pressure loss is preferably 200 Pa or less.

The fibers of the porous membrane are not limited, and a fluororesin porous membrane, a polyolefin porous membrane, and the like are preferable.

### (3) Fluororesin porous membrane

The fluororesin porous membrane preferably mainly contains, for example, a fluororesin such as PTFE (polytetrafluoroethylene). The term "mainly" means that, when a plurality of types of components are contained, the fluororesin is contained in the largest amount. This can increase the chemical resistance of the filter medium. The mass ratio of fluororesin fibers in the fluororesin porous membrane may be, for example, 50 mass% or more, and is preferably 90 mass% or more and more preferably 99 mass% or more. The fluororesin porous membrane may be composed only of fluororesin fibers.

The geometric mean fiber diameter of the fibers in the fluororesin porous membrane is preferably 199 nm or less, more preferably 119 nm or less, and further preferably 117 nm or less. This easily increases the PF value of the fluororesin porous membrane.

The filling factor in the fluororesin porous membrane is preferably 1.4% or more and more preferably 2.0% or more from the viewpoint of easily improving the collection efficiency. The filling factor in the fluororesin porous membrane is preferably 4.0% or less from the viewpoint of reducing the pressure loss.

The basis weight in the fluororesin porous membrane is preferably 1.1 g/m² or more and more preferably 1.3 g/m² or more from the viewpoint of easily improving the collection efficiency.

The thickness in the fluororesin porous membrane is preferably 19 µm or more from the viewpoint of easily improving the collection efficiency.

For the fluororesin porous membrane, the PF value defined by the following formula PF value = {-log((100 - collection efficiency (%))/100)}/(pressure loss (Pa)/1000) using a pressure loss determined when air is passed at a flow rate of 5.3 cm/s and a collection efficiency for polyalphaolefin particles with a particle diameter of 0.1 µm determined when air containing the polyalphaolefin particles is passed at a flow rate of 5.3 cm/s is preferably 35 or more and more preferably 40 or more. In this fluororesin porous membrane, a low pressure loss is easily achieved while a good collection efficiency is maintained for collection targets having a small particle diameter.

From the viewpoint of easily suppressing the clogging of the fluororesin porous membrane by keeping a large amount of voids in the fluororesin porous membrane, the thickness in the fluororesin porous membrane is preferably 19 µm or more and the pressure loss is preferably 170 Pa or less.

The fluororesin porous membrane preferably has a porous membrane structure including fibrils (fibers, not illustrated) and nodes (nodal portions, not illustrated) connected to the fibrils by containing the above-described fibers.

A component different from the fluororesin in the fluororesin porous membrane is, for example, an inorganic filler that is a non-fibrillatable non-melt-fabricable component (B component) described later.

The fluororesin used for the fluororesin porous membrane may be composed of one component, or may be composed of two or more components. Examples of the fluororesin composed of two or more components include a three-component mixture of a fibrillatable PTFE (hereinafter also referred to as an A component), the non-fibrillatable non-melt-fabricable component (hereinafter also referred to as a B component), and a non-fibrillatable melt-fabricable component having a melting point of less than 320°C (hereinafter also referred to as a C component). The fluororesin porous membrane preferably includes a combination of these three components. The fluororesin porous membrane composed of these three components has a membrane structure with a higher porosity and a larger thickness than fibrillatable PTFE (high-molecular-weight PTFE) porous membranes. Therefore, fine particles in gas can be collected in a large region of the filter medium in the thickness direction, which can improve the dust-holding capacity. By forming the fluororesin porous membrane from these three components, the dust-holding capacity of liquid particles can be particularly increased rather than that of solid particles.

Hereinafter, the above three types of components will be described in more detail.

### (3-1) A component: fibrillatable PTFE

The fibrillatable PTFE is, for example, a high-molecular-weight PTFE obtained through emulsion polymerization or suspension polymerization of tetrafluoroethylene (TFE). The high molecular weight herein is a molecular weight at which fibrillation is easily caused and fibrils having a large fiber length are obtained during drawing in the production of a fluororesin porous membrane, the standard specific gravity (SSG) is 2.130 to 2.230, and the melt flow substantially does not occur because of the high melt viscosity. The SSG of the fibrillatable PTFE is preferably 2.130 to 2.190 and more preferably 2.140 to 2.170 from the viewpoint of achieving ease of fibrillation and providing fibrils having a large fiber length. An excessively high SSG may deteriorate the drawability of the mixture of the A to C components. An excessively low SSG deteriorates the rollability and thus deteriorates the uniformity of the fluororesin porous membrane, which may increase the pressure loss of the fluororesin porous membrane. From the viewpoint of achieving ease of fibrillation and providing fibrils having a large fiber length, a PTFE obtained through emulsion polymerization is preferred. The standard specific gravity (SSG) is measured in conformity to ASTM D 4895.

The presence or absence of fibrillability, that is, whether fibrillation is achieved or not can be judged by checking whether paste extrusion, which is a typical method for molding a high-molecular-weight PTFE powder obtained from a polymer of TFE, can be performed or not. Normally, paste extrusion can be performed because a high-molecular-weight PTFE has fibrillability. In the case where an unfired molded body obtained through paste extrusion substantially does not have strength or elongation, such as the case where the molded body has an elongation of 0% and is broken when stretched, such a molded body can be considered to have no fibrillability.

The high-molecular-weight PTFE may be a modified polytetrafluoroethylene (hereafter referred to as a modified PTFE), a homo-polytetrafluoroethylene (hereafter referred to as a homo-PTFE), or a mixture of a modified PTFE and a homo-PTFE. Non-limiting examples of the homo-PTFE that can be suitably used include homo-PTFEs disclosed in Japanese Unexamined Patent Application Publication No. 53-60979, Japanese Unexamined Patent Application Publication No. 57-135, Japanese Unexamined Patent Application Publication No. 61-16907, Japanese Unexamined Patent Application Publication No. 62-104816, Japanese Unexamined Patent Application Publication No. 62-190206, Japanese Unexamined Patent Application Publication No. 63-137906, Japanese Unexamined Patent Application Publication No. 2000-143727, Japanese Unexamined Patent Application Publication No. 2002-201217, International Publication No. 2007/046345, International Publication No. 2007/119829, International Publication No. 2009/001894, International Publication No. 2010/113950, and International Publication No. 2013/027850. In particular, homo-PTFEs disclosed in Japanese Unexamined Patent Application Publication No. 57-135, Japanese Unexamined Patent Application Publication No. 63-137906, Japanese Unexamined Patent Application Publication No. 2000-143727, Japanese Unexamined Patent Application Publication No. 2002-201217, International Publication No. 2007/046345, International Publication No. 2007/119829, and International Publication No. 2010/113950 are preferred from the viewpoint of high drawability.

The modified PTFE is constituted by TFE and a monomer other than TFE (hereafter referred to as a modifying monomer). Non-limiting examples of the modified PTFE include PTFEs homogeneously modified by the modifying monomer, PTFEs modified at the beginning of polymerization reaction, and PTFEs modified at the end of polymerization reaction. Examples of the modified PTFE that can be suitably used include modified PTFEs disclosed in Japanese Unexamined Patent Application Publication No. 60-42446, Japanese Unexamined Patent Application Publication No. 61-16907, Japanese Unexamined Patent Application Publication No. 62-104816, Japanese Unexamined Patent Application Publication No. 62-190206, Japanese Unexamined Patent Application Publication No. 64-1711, Japanese Unexamined Patent Application Publication No. 2-261810, Japanese Unexamined Patent Application Publication No. 11-240917, Japanese Unexamined Patent Application Publication No. 11-240918, International Publication No. 2003/033555, International Publication No. 2005/061567, International Publication No. 2007/005361, International Publication No. 2011/055824, and International Publication No. 2013/027850. In particular, modified PTFEs disclosed in Japanese Unexamined Patent Application Publication No. 61-16907, Japanese Unexamined Patent Application Publication No. 62-104816, Japanese Unexamined Patent Application Publication No. 64-1711, Japanese Unexamined Patent Application Publication No. 11-240917, International Publication No. 2003/033555, International Publication No. 2005/061567, International Publication No. 2007/005361, and International Publication No. 2011/055824 are preferred from the viewpoint of high drawability.

The modified PTFE contains a TFE unit based on TFE and a modifying monomer unit based on the modifying monomer. The modifying monomer unit is a moiety in a molecular structure of the modified PTFE, the moiety being derived from the modifying monomer. The content of the modifying monomer unit in all monomer units of the modified PTFE is preferably 0.001 to 0.500 wt% and more preferably 0.01 to 0.30 wt%. The all monomer units are moieties derived from all monomers in a molecular structure of the modified PTFE.

The modifying monomer is not limited as long as the modifying monomer is copolymerizable with TFE. Examples of the modifying monomer include perfluoroolefins such as hexafluoropropylene (HFP); chlorofluoroolefins such as chlorotrifluoroethylene (CTFE); hydrogen-containing fluoroolefins such as trifluoroethylene and vinylidene fluoride (VDF); perfluorovinyl ethers; and (perfluoroalkyl)ethylenes (PFAE) and ethylene. A single modifying monomer may be used or a plurality of modifying monomers may be used.

The perfluorovinyl ethers are not limited. For example, an unsaturated perfluoro compound represented by general formula (1) below can be used.

CF₂=CF-ORf ··· (1)

In the formula, Rf represents a perfluoro organic group.

In this specification, the perfluoro organic group is an organic group obtained by substituting all hydrogen atoms bonding to carbon atoms with fluorine atoms. The perfluoro organic group may contain ether oxygen.

An example of the perfluorovinyl ether is a perfluoro(alkyl vinyl ether) (PAVE) with Rf representing a perfluoroalkyl group having 1 to 10 carbon atoms in the general formula (1). The perfluoroalkyl group preferably has 1 to 5 carbon atoms. Examples of the perfluoroalkyl group in PAVE include a perfluoromethyl group, a perfluoroethyl group, a perfluoropropyl group, a perfluorobutyl group, a perfluoropentyl group, and a perfluorohexyl group. The PAVE is preferably perfluoro(propyl vinyl ether) (PPVE) or perfluoro(methyl vinyl ether) (PMVE).

The perfluoroalkyl ethylene (PFAE) is not limited, and examples thereof include perfluorobutyl ethylene (PFBE) and perfluorohexyl ethylene (PFHE).

The modifying monomer in the modified PTFE is preferably at least one monomer selected from the group consisting of HFP, CTFE, VDF, PAVE, PFAE, and ethylene.

From the viewpoint of achieving ease of fibrillation and providing fibrils having a large fiber length, the content of the homo-PTFE is preferably more than 50 wt% of the fibrillatable PTFE.

The fibrillatable PTFE may be a combination of a plurality of the above-described components.

From the viewpoint of maintaining the fibrous structure of the fluororesin porous membrane, the content of the fibrillatable PTFE is preferably more than 50 wt% of the fluororesin porous membrane.

### (3-2) B component: non-fibrillatable non-melt-fabricable component

The non-fibrillatable non-melt-fabricable component is mainly unevenly distributed in the nodal portions as nonfibrous particles and has a function of suppressing fibrillation of the fibrillatable PTFE.

Examples of the non-fibrillatable non-melt-fabricable component include components having thermoplasticity, such as low-molecular-weight PTFEs; thermosetting resins; inorganic fillers; and mixtures of the foregoing.

The component having thermoplasticity preferably has a melting point of 320°C or higher and has as high a melt viscosity as possible. For example, the low-molecular-weight PTFE has a high melt viscosity and therefore can remain in the nodal portions even when processed at a temperature higher than or equal to the melting point. In this specification, the low-molecular-weight PTFE is a PTFE having a number-average molecular weight of 600,000 or less, a melting point of 320°C or higher and 335°C or lower, and a melt viscosity at 380°C of 100 Pa·s to 7.0 × 10⁵ Pa·s (refer to Japanese Unexamined Patent Application Publication No. 10-147617).

Examples of the method for producing a low-molecular-weight PTFE include a method in which a high-molecular-weight PTFE powder (molding powder) obtained through suspension polymerization of TFE or a high-molecular-weight PTFE powder (fine powder) obtained through emulsion polymerization of TFE and a particular fluoride are thermally decomposed by causing a catalytic reaction at high temperature (refer to Japanese Unexamined Patent Application Publication No. 61-162503), a method in which the high-molecular-weight PTFE powder or a molded body is irradiated with ionizing radiation (refer to Japanese Unexamined Patent Application Publication No. 48-78252), and a method in which TFE is directly polymerized together with a chain transfer agent (refer to, e.g., International Publication No. 2004/050727, International Publication No. 2009/020187, and International Publication No. 2010/114033). The low-molecular-weight PTFE may be a homo-PTFE or a modified PTFE containing the above-described modifying monomer as in the case of the fibrillatable PTFE.

The low-molecular-weight PTFE has no fibrillability. The presence or absence of fibrillability can be judged by the above-described method. For the low-molecular-weight PTFE, an unfired molded body obtained through paste extrusion substantially does not have strength or elongation, such as an elongation of 0%, and is broken when stretched.

The low-molecular-weight PTFE is not limited, but preferably has a melt viscosity at 380°C of 1000 Pa·s or more, more preferably 5000 Pa·s or more, and further preferably 10000 Pa·s or more. At a high melt viscosity, even if the non-fibrillatable melt-fabricable component serving as a C component is melted during production of the fluororesin porous membrane, the non-fibrillatable non-melt-fabricable component can remain in the nodal portions, which can suppress the fibrillation.

Examples of the thermosetting resin include epoxy resin, silicone resin, polyester resin, polyurethane resin, polyimide resin, phenolic resin, and mixtures of the foregoing resins. The thermosetting resin is desirably an uncured resin dispersed in water from the viewpoint of workability of co-coagulation described later. Each of these thermosetting resins is commercially available.

Examples of the inorganic filler include talc, mica, calcium silicate, glass fiber, calcium carbonate, magnesium carbonate, carbon fiber, barium sulfate, calcium sulfate, and mixtures of the foregoing. In particular, talc is preferably used from the viewpoint of specific gravity and affinity for a fibrillatable high-molecular-weight PTFE. The inorganic filler preferably has a particle diameter of 3 µm or more and 20 µm or less from the viewpoint of formation of a stable dispersion body during production of the fluororesin porous membrane. The particle diameter is an average particle diameter measured by a laser diffraction/scattering method. Each of these inorganic fillers is commercially available.

The non-fibrillatable non-melt-fabricable component may contain the above-described components in a combined manner.

The content of the non-fibrillatable non-melt-fabricable component is preferably 1 wt% or more and 50 wt% or less of the fluororesin porous membrane. When the content of the non-fibrillatable non-melt-fabricable component is 50 wt% or less, the fibrous structure of the fluororesin porous membrane can be easily maintained. The content of the non-fibrillatable non-melt-fabricable component is preferably 20 wt% or more and 40 wt% or less and more preferably 30 wt%. When the content is 20 wt% or more and 40 wt% or less, fibrillation of the fibrillatable PTFE can be more effectively suppressed.

### (3-3) C component: non-fibrillatable melt-fabricable component having a melting point of less than 320°C

The non-fibrillatable melt-fabricable component having a melting point of lower than 320°C (hereafter also referred to as a non-fibrillatable melt-fabricable component) has flowability when melted. Therefore, the non-fibrillatable melt-fabricable component can be melted during production (drawing) of the fluororesin porous membrane and cured in the nodal portions. This increases the strength of the whole fluororesin porous membrane and thus can suppress the deterioration of filter performance even if the fluororesin porous membrane is compressed, for example, in the downstream processes.

The non-fibrillatable melt-fabricable component preferably has a melt viscosity of less than 10000 Pa·s at 380°C. The melting point of the non-fibrillatable melt-fabricable component is a temperature at a peak top of a heat-of-fusion curve obtained when the component is heated to a temperature higher than or equal to the melting point at a temperature-increasing rate of 10 °C/min to be completely melted once, cooled to a temperature lower than or equal to the melting point at 10 °C/min, and then heated again at 10 °C/min using a differential scanning calorimeter (DSC).

Examples of the non-fibrillatable melt-fabricable component include components that sufficiently exhibit meltability and flowability at a drawing temperature during production of the fluororesin porous membrane, such as heat-meltable fluoropolymer, polystyrene resin, polyethylene terephthalate (PET) resin, polyester resin, polyamide resin, and mixtures of the foregoing resins. In particular, a heat-meltable fluoropolymer is preferred from the viewpoint of high heat resistance at a drawing temperature during production of the fluororesin porous membrane and high chemical resistance. The heat-meltable fluoropolymer is a fluoropolymer having a copolymer unit derived from at least one fluorinated ethylenically unsaturated monomer, preferably two or more fluorinated ethylenically unsaturated monomers, represented by general formula (2) below.

RCF=CR₂ ··· (2)

(In the formula, R are each independently selected from H, F, Cl, alkyl having 1 to 8 carbon atoms, aryl having 6 to 8 carbon atoms, cyclic alkyl having 3 to 10 carbon atoms, and perfluoroalkyl having 1 to 8 carbon atoms. In this case, all R may be the same, any two R may be the same and the remaining one R may be different from the two R, or all R may be different from each other.)

Non-limiting useful examples of the compound represented by the general formula (2) include perfluoroolefins such as fluoroethylene, VDF, trifluoroethylene, TFE, and HFP; chlorofluoroolefins such as CTFE and dichlorodifluoroethylene; (perfluoroalkyl)ethylenes such as PFBE and PFHE; perfluoro-1,3-dioxole; and mixtures of the foregoing.

The fluoropolymer may also include a copolymer derived from copolymerization of at least one monomer represented by the above general formula (2) and at least one copolymerizable comonomer represented by the above general formula (1) and/or general formula (3) below.

R₂C=CR₂ ··· (3)

(In the formula, R are each independently selected from H, Cl, an alkyl group having 1 to 8 carbon atoms, an aryl group having 6 to 8 carbon atoms, and a cyclic alkyl group having 3 to 10 carbon atoms. In this case, all R may be the same, any two or more R may be the same and the remaining R may be different from the two or more R, or all R may be different from each other. If the remaining R are plural R, the plural R may be different from each other.)

A useful example of the compound represented by the general formula (1) is a perfluoro(alkyl vinyl ether) (PAVE). The PAVE is preferably perfluoro(propyl vinyl ether) (PPVE) or perfluoro(methyl vinyl ether) (PMVE).

Useful examples of the compound represented by the general formula (3) include ethylene and propylene.

More specific examples of the fluoropolymer include polyfluoroethylene derived from polymerization of fluoroethylene, polyvinylidene fluoride (PVDF) derived from polymerization of vinylidene fluoride (VDF), polychlorotrifluoroethylene (PCTFE) derived from polymerization of chlorotrifluoroethylene (CTFE), a fluoropolymer derived from copolymerization of two or more different monomers represented by the general formula (2), and a fluoropolymer derived from copolymerization of at least one monomer represented by the general formula (2) and at least one monomer represented by the general formula (1) and/or at least one monomer represented by the general formula (3).

Examples of the fluoropolymer include polymers having a copolymer unit derived from VDF and hexafluoropropylene (HFP) and polymers derived from TFE and at least one copolymerizable comonomer (at least 3 wt%) other than TFE. Examples of the latter fluoropolymer include TFE/PAVE copolymers (PFA), TFE/PAVE/CTFE copolymers, TFE/HFP copolymers (FEP), TFE/ethylene copolymers (ETFE), TFE/HFP/ethylene copolymers (EFEP), TFE/VDF copolymers, TFE/VDF/HFP copolymers, TFE/VDF/CTFE copolymers, and mixtures of the foregoing copolymers.

The non-fibrillatable melt-fabricable component may contain the above-described components in a combined manner.

The content of the non-fibrillatable melt-fabricable component in the fluororesin porous membrane is preferably 0.1 wt% or more and less than 20 wt%. When the content is less than 20 wt%, the non-fibrillatable melt-fabricable component is dispersed also in portions other than the nodal portions in the fluororesin porous membrane to suppress an increase in pressure loss of the fluororesin porous membrane. When the content is less than 20 wt%, drawing is easily performed at a high area drawing ratio of 40 times or more, which will be described later. When the content of the non-fibrillatable melt-fabricable component in the fluororesin porous membrane is 0.1 wt% or more, the deterioration of filter performance of the fluororesin porous membrane can be sufficiently easily suppressed even if a compressive force and the like are applied in the downstream processes. The content of the non-fibrillatable melt-fabricable component in the fluororesin porous membrane is preferably 15 wt% or less and more preferably 10 wt% or less. From the viewpoint of ensuring the strength of the fluororesin porous membrane, the content of the non-fibrillatable melt-fabricable component in the fluororesin porous membrane is preferably 0.5 wt% or more. The content is particularly preferably about 5 wt%.

The content of the non-fibrillatable melt-fabricable component is preferably 10 wt% or less to satisfactorily perform drawing at an area drawing ratio of 40 times or more and 800 times or less.

In the fluororesin porous membrane composed of the above-described three components, the fibrils are mainly composed of the A component, and the nodal portions are composed of the A to C components. Such nodal portions are formed relatively large in the fluororesin porous membrane, thereby forming a fluororesin porous membrane having a large thickness. Furthermore, since such nodal portions contain the non-fibrillatable melt-fabricable component, the nodal portions are relatively hard and serve as columns that support the fluororesin porous membrane in the thickness direction. Therefore, even when the fluororesin porous membrane receives a compressive force and the like in the thickness direction in the downstream processes, such as stacking of the air-permeable support member or pleating described later, it is possible to suppress the reduction in filter performance of the fluororesin porous membrane.

### (4) Polyolefin porous membrane

The polyolefin porous membrane preferably mainly contains, for example, a polyolefin. Thus, an environmental load on the earth can be reduced by using, as the porous membrane included in the air filter medium, a polyolefin porous membrane including bonds having a weaker bonding force than carbon-fluorine bonds.

The polyolefin porous membrane is not limited to a polyolefin porous membrane in which all of the constituent components, 100 wt%, are composed of a polyolefin (composed only of a polyolefin). The mass ratio of the polyolefin in the polyolefin porous membrane is, for example, 60 wt% or more, preferably 80 wt% or more, more preferably 90 wt% or more, and further preferably 95 wt% or more.

The polyolefin is preferable to a polyester resin such as PET (polyethylene terephthalate) from the viewpoint of easily decreasing the mean fiber diameter and easily achieving good chemical resistance. Herein, the chemical resistance may be, for example, maintaining good performance even in an environment in which hydrofluoric acid (HF) is present. The static elimination process may be, for example, a process conforming to the description in JIS B 9908-4:2019. The polyolefin is preferable to an SBS (styrenebutadiene-styrene) resin and an ES (ethylene-styrene) resin from the viewpoint of easily decreasing the mean fiber diameter.

It is sufficient that the polyolefin porous membrane includes polyolefin fibers. The polyolefin fibers may be polypropylene fibers, polybutene fibers, polyethylene fibers, ethylene-propylene copolymer fibers, or mixed fibers of the foregoing. In particular, the polyolefin fibers are preferably polyethylene fibers from the viewpoint of easily obtaining fibers having a smaller mean fiber diameter.

The polyolefin porous membrane is preferably a porous membrane obtained by drawing a polyolefin film. By drawing the polyolefin film in a direction intersecting the thickness direction, relatively fine fibers are easily generated from crystals.

Examples of the polyolefin film include LDPE (low-density polyethylene) having a melting point of 105°C to 115°C and a density of 0.92 g/cm³ or less, HDPE (highdensity polyethylene) having a melting point of 125°C to 135°C and a density of 0.94 g/cm³ or more, LLDPE (linear low-density polyethylene) having a melting point of 120°C to 125°C and a density of 0.92 g/cm³ or less, and UHMWPE (ultrahigh-molecular-weight polyethylene) having a melting point of 130°C to 138°C and a density of 0.94 g/cm³ or more. The polyolefin film is preferably obtained by mixing, into UHMWPE (ultrahigh-molecular-weight polyethylene), one or two or more of LDPE (low-density polyethylene), HDPE (highdensity polyethylene), and LLDPE (linear low-density polyethylene), from the viewpoint of improving the moldability and the strength.

The porosity of the polyolefin film is preferably, for example, 55% or more and 70% or less.

The thickness of the polyolefin film is preferably, for example, 10.0 µm or more and 150 µm or less and more preferably 30.0 µm or more and 120.0 µm or less.

The mean pore size of the polyolefin film is preferably, for example, 10 µm or more and 80 µm or less.

The weight-average molecular weight Mw of the polyolefin film is preferably, for example, 3.0 × 10⁵ or more and 300.0 × 10⁵ or less. The weight-average molecular weight Mw may be, for example, a value obtained by performing measurement by GPC (gel permeation chromatography).

The polyolefin film may be obtained by, for example, a dry film-forming method or a wet film-forming method. In the wet film-forming method, a polyolefin film is obtained by drawing a mixture of a polyolefin and a volatile or nonvolatile solvent. On the other hand, in the dry film-forming method, a polyolefin film is obtained by drawing a polyolefin in a state without a volatile or nonvolatile solvent. Herein, the polyolefin film is preferably obtained by the wet film-forming method from the viewpoint of easily increasing the porosity and easily achieving a uniform structure. The dry film-forming method may be, for example, a method in which pelletized polyethylene and a volatile solvent that is an aromatic hydrocarbon such as decalin are melt-kneaded, extruded, and crystallized through cooling, and then the solvent is dried and removed through heating. The wet film-forming method may be, for example, a method in which pelletized polyethylene and a nonvolatile solvent such as liquid paraffin are melt-kneaded, extruded, and crystallized through cooling, the nonvolatile solvent is then removed by a publicly known washing method, drying is performed, and drawing is further performed as needed.

The geometric mean fiber diameter of the fibers in the polyolefin porous membrane is preferably 199 nm or less, more preferably 120 nm or less, and further preferably 119 nm or less. This easily increases the PF value of the polyolefin porous membrane.

The filling factor in the polyolefin porous membrane is preferably 4.0% or more and more preferably 4.5% or more from the viewpoint of easily improving the collection efficiency. The filling factor in the polyolefin porous membrane is preferably 8.0% or less and more preferably 7.5% or less from the viewpoint of reducing the pressure loss.

The basis weight in the polyolefin porous membrane is preferably 0.80 g/m² or more and more preferably 0.85 g/m² or more from the viewpoint of easily improving the collection efficiency.

The thickness in the polyolefin porous membrane is preferably 11.0 µm or more and more preferably 12.0 µm or more from the viewpoint of easily improving the collection efficiency.

For the polyolefin porous membrane, the PF value defined by the following formula PF value = {-log((100 - collection efficiency (%))/100)}/(pressure loss (Pa)/1000) using a pressure loss determined when air is passed at a flow rate of 5.3 cm/s and a collection efficiency for polyalphaolefin particles with a particle diameter of 0.1 µm determined when air containing the polyalphaolefin particles is passed at a flow rate of 5.3 cm/s is preferably 32 or more and more preferably 33 or more. In this polyolefin porous membrane, a low pressure loss is easily achieved while a good collection efficiency is maintained for collection targets having a small particle diameter.

From the viewpoint of easily suppressing the clogging of the polyolefin porous membrane by keeping a large amount of voids in the polyolefin porous membrane, the thickness in the polyolefin porous membrane is preferably 12 µm or more and the pressure loss is preferably 200 Pa or less.

### (5) Air-permeable support member

Even if it is difficult to independently use the porous membrane because of its small thickness or the like, the air-permeable support member supports the porous membrane to allow the independent use of the porous membrane.

The material and structure of the air-permeable support member are not limited, and examples thereof include a nonwoven fabric, a woven fabric, a metal mesh, and a resin net. In particular, a nonwoven fabric having heat fusibility is preferred from the viewpoint of strength, collectability, flexibility, and workability. The nonwoven fabric is preferably a nonwoven fabric in which some or all of constituent fibers have a core/sheath structure, a two-layer nonwoven fabric including a fiber layer formed of a low-melting-point material and a fiber layer formed of a high-melting-point material, or a nonwoven fabric whose surface is coated with a heat fusible resin. Such a nonwoven fabric is, for example, a spun-bonded nonwoven fabric. The nonwoven fabric having a core/sheath structure is preferably a nonwoven fabric in which the core component has a higher melting point than the sheath component. Examples of the combination of materials for the core/sheath include PET/PE and high-melting-point polyester/low-melting-point polyester. Examples of the combination of the low-melting-point material/high-melting-point material of the two-layer nonwoven fabric include PE/PET, PP/PET, PBT/PET, and low-melting-point PET/high-melting-point PET. Examples of the nonwoven fabric whose surface is coated with a heat fusible resin include a PET nonwoven fabric whose surface is coated with EVA (ethylene-vinyl acetate copolymer resin) and a PET nonwoven fabric whose surface is coated with an olefin resin.

Non-limiting examples of the material for the nonwoven fabric include polyolefins (e.g., PE and PP), polyamides, polyesters (e.g., PET), aromatic polyamides, and composite materials of the foregoing.

The air-permeable support member can be bonded to the porous membrane by utilizing an anchor effect due to partial melting of the air-permeable support member through heating or due to melting of a hot-melt resin, or by utilizing adhesion using a reactive adhesive or the like.

The air-permeable support member has a pressure loss, a collection efficiency, and a dust holding capacity much lower than those of the above-described porous membrane. The pressure loss and the collection efficiency of the air-permeable support member may be 5% or less of those of the porous membrane and may be values considered to be substantially zero.

The pressure loss of the air-permeable support member is, for example, preferably 10 Pa or less and more preferably 5 Pa or less. The collection efficiency of the air-permeable support member for NaCl having a particle diameter of 0.1 µm may be, for example, a value considered to be substantially zero or about zero.

The thickness of the air-permeable support member is, for example, preferably 0.3 mm or less and more preferably 0.25 mm or less.

The basis weight of the air-permeable support member is, for example, preferably 20 g/m² or more and 50 g/m² or less.

### (6) Examples of applications

The air filter medium is used for, for example, the following applications:
fields of, for example, ULPA filters (ultra low penetration air filters) (for producing semiconductors), HEPA filters (for hospitals and for producing semiconductors), cylindrical cartridge filters (for industrial use), bag filters (for industrial use), heatresistant bag filters (for treating exhaust gas), heatresistant pleated filters (for treating exhaust gas), SINBRAN (registered trademark) filters (for industrial use), catalyst filters (for treating exhaust gas), adsorbentincluding filters (for installation in HDD), adsorbentincluding vent filters (for installation in HDD), vent filters (e.g., for installation in HDD), filters for vacuum cleaners (for vacuum cleaners), general-purpose multilayered felt materials, cartridge filters for gas turbines (interchangeable components for gas turbines), and cooling filters (for casings of electronic devices);
fields of materials for freeze-drying such as freeze-drying bottles, automobile ventilation materials for electronic circuits and lamps, bottle applications such as bottle caps, protective ventilation for electronic devices, and ventilation/internal pressure regulation such as medical ventilation; and
liquid filtration fields of, for example, semiconductor liquid filtration filters (for producing semiconductors), hydrophilic filters (for producing semiconductors), filters for chemicals (for treating chemical solutions), filters for pure water production lines (for producing pure water), and backwash liquid filtration filters (for treating industrial wastewater).

The air filter medium is preferably used particularly in any of a food factory, a pharmaceutical factory, a clean room, and an air cleaner.

The air filter medium more easily exhibits its effect when used in an environment in which occurrence of mold is particularly of concern. For example, the air filter medium is preferably used in an environment having a relative humidity of 60% or more, more preferably in an environment having a temperature of 20 degrees or more and a relative humidity of 60% or more, and further preferably in an environment having a temperature of 25 degrees or more and a relative humidity of 70% or more.

### (7) Filter pack

Next, a filter pack will be described with reference to Fig. 5.

Fig. 5 is an external perspective view of a filter pack 20.

The filter pack 20 includes the above-described air filter medium (for example, air filter media 30a to 30d). The air filter medium of the filter pack 20 is a filter medium that has been processed so as to have a zigzag shape in which mountain folds and valley folds are alternately repeated (pleating). The pleating can be performed using, for example, a rotary folding machine. The folding width of the filter medium is not limited, and is, for example, 25 mm or more and 280 mm or less. By performing pleating, the folding area of the filter medium can be increased in the case where the filter pack 20 is used for an air filter unit. Thus, an air filter unit having high collection efficiency can be obtained.

The filter pack 20 may further include, in addition to the air filter medium, spacers (not illustrated) for keeping pleat spacing when used for an air filter unit. The material for the spacers is not limited, and is preferably a hot-melt resin.

### (8) Air filter unit

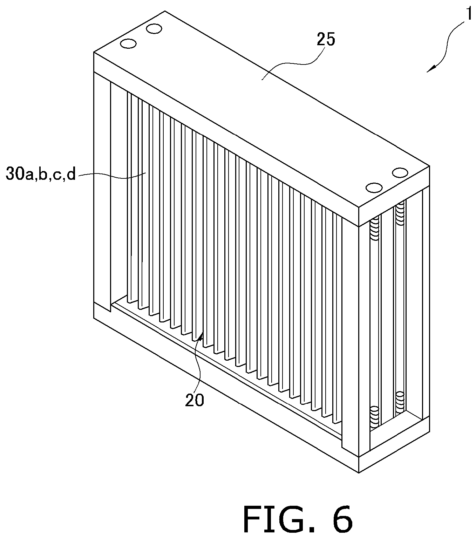

Next, an air filter unit 1 will be described with reference to Fig. 6.

Fig. 6 is an external perspective view of the air filter unit 1.

The air filter unit 1 includes the above-described air filter medium or filter pack, and a frame body 25 that holds the air filter medium or the filter pack. In other words, the air filter unit may be produced such that an air filter medium not subjected to mountain folds or valley folds is held by the frame body or such that the filter pack 20 is held by the frame body 25. The air filter unit 1 illustrated in Fig. 6 is produced using the filter pack 20 and the frame body 25.

The frame body 25 is produced by, for example, assembling boards or molding a resin, and the filter pack 20 and the frame body 25 are preferably sealed with each other using a sealer. The sealer is used to prevent leakage between the filter pack 20 and the frame body 25 and is formed of, for example, a resin such as an epoxy resin, an acrylic resin, or a urethane resin.

The air filter unit 1 including the filter pack 20 and the frame body 25 may be a mini-pleat air filter unit in which a single filter pack 20 extending in a flat-plate form is held so as to be accommodated inside the frame body 25 or may be a V-bank air filter unit or a single header air filter unit in which a plurality of filter packs extending in a flat-plate form are arranged and held in the frame body.

### Examples

The present disclosure will be specifically described below based on Examples and Comparative Examples.

### (Example 1)

For an air filter medium of Example 1, an air filter medium having a structure illustrated in Fig. 2 was prepared.

Specifically, an upstream air-permeable support member 21a and a downstream air-permeable support member 21b were each a spun-bonded nonwoven fabric (mean fiber diameter: 20 µm, basis weight: 40 g/m², thickness: 0.2 mm) formed of fibers having a core/sheath structure in which PET was used for the core and PE was used for the sheath. For a porous membrane 31 sandwiched between the upstream air-permeable support member 21a and the downstream air-permeable support member 21b, a porous membrane obtained by the following steps was used.

An FP raw material of the porous membrane used for the air filter medium of Example 1 was a mixture prepared by mixing, at a weight ratio of 75:25, a fine powder (manufactured by Daikin Industries, Ltd., product name: F302) of perfluoroalkyl vinyl ether-modified polytetrafluoroethylene that is a copolymer of tetrafluoroethylene and perfluoroalkyl vinyl ether and a fine powder (manufactured by Daikin Industries, Ltd., product name: F106) of polytetrafluoroethylene having an average molecular weight of 6,500,000 to obtain a mixed powder, and mixing 24 parts by weight of an extrusion aid (liquid lubricant) with 100 parts by weight of the above mixed powder.

Then, the mixture was extruded using a paste extruder equipped with a sheet die to obtain a sheet-shaped molded body. The sheet-shaped molded body was molded into a film using calender rolls heated to 60°C to obtain a PTFE film. The resulting film was passed through a hot-air drying furnace at 190°C to evaporate and remove the hydrocarbon oil. Subsequently, the unfired PTFE film was drawn from a size of 70 mm × 70 mm to 203 mm × 500 mm under a predetermined temperature environment (250°C), and then further drawn from a size of 70 mm × 70 mm to 500 mm × 500 mm, thereby obtaining a porous membrane having a total drawing ratio of 1057 times.

### (Example 2)

An air filter medium of Example 2 was obtained in the same manner as in Example 1, except that the porous membrane of Example 1 was further heated for 30 seconds under an environment having an ambient temperature of 340°C to obtain a porous membrane of Example 2.

### (Example 3)

An air filter medium of Example 3 was obtained in the same manner as in Example 1, except that the porous membrane of Example 1 was further heated for 60 seconds under an environment having an ambient temperature of 340°C to obtain a porous membrane of Example 3.

### (Example 4)

An air filter medium of Example 4 was obtained in the same manner as in Example 1, except that the porous membrane of Example 1 was further heated for 120 seconds under an environment having an ambient temperature of 340°C to obtain a porous membrane of Example 4.

### (Example 5)

An air filter medium of Example 5 was obtained in the same manner as in Example 1, except that the drawing conditions of the porous membrane of Example 1 were changed to conditions of performing drawing from a size of 70 mm × 70 mm to 203 mm × 500 mm under a predetermined temperature environment (250°C) and then further performing drawing from a size of 70 mm × 70 mm to 500 mm × 500 mm, to thereby obtain a porous membrane of Example 5 having a total drawing ratio of 364 times.

### (Example 6)

An air filter medium of Example 6 was obtained in the same manner as in Example 5, except that the porous membrane of Example 5 was further heated for 30 seconds under an environment having an ambient temperature of 340°C to obtain a porous membrane of Example 6.

### (Example 7)

An air filter medium of Example 7 was obtained in the same manner as in Example 1, except that the porous membrane of Example 1 was changed to a porous membrane of Example 7 as described below. The porous membrane of Example 7 was a polyolefin porous membrane produced by drawing a polyethylene film under predetermined drawing conditions. Specifically, the polyethylene film was obtained by a wet film-forming method and had a thickness of 92 µm, a mean pore size of 35 nm, and a weight-average molecular weight of 500,000. The polyethylene film was biaxially drawn using a batch-type biaxial drawing machine in an environment at a drawing temperature of 120°C, with a drawing speed in an MD direction (machine direction) set to 5 mm/s, a drawing speed in a TD direction (transverse direction) set to 3 mm/s, and a drawing ratio in the MD direction set to 8 times and a drawing ratio in the TD direction set to 8 times so that the areal drawing ratio was 64 times.

### (Example 8)

An air filter medium of Example 8 was obtained in the same manner as in Example 1, except that the porous membrane of Example 1 was changed to a porous membrane of Example 8 as described below. The porous membrane of Example 8 was a polyolefin porous membrane produced by drawing a polyethylene film under predetermined drawing conditions. Specifically, the polyethylene film was obtained by a wet film-forming method and had a thickness of 92 µm, a mean pore size of 35 nm, and a weight-average molecular weight of 500,000. The polyethylene film was biaxially drawn using a batch-type biaxial drawing machine in an environment at a drawing temperature of 120°C, with a drawing speed in an MD direction (machine direction) set to 3 mm/s, a drawing speed in a TD direction (transverse direction) set to 3 mm/s, and a drawing ratio in the MD direction set to 8 times and a drawing ratio in the TD direction set to 8 times so that the areal drawing ratio was 64 times.

### (Comparative Example 1)

An air filter medium of Comparative Example 1 was obtained in the same manner as in Example 1, except that a processed tape obtained by embossing an unfired PTFE film obtained in the same manner as in Example 1 with a mean height of 250 µm, a diameter of 2 mm, and a spacing of 4 mm was drawn from a size of 70 mm × 70 mm to 203 mm × 500 mm under a predetermined temperature environment (250°C), and then further drawn from a size of 70 mm × 70 mm to 500 mm × 500 mm, thereby obtaining a porous membrane having a total drawing ratio of 1057 times.

### (Comparative Example 2)

An air filter medium of Comparative Example 2 was obtained in the same manner as in Example 1, except that a processed tape obtained by embossing an unfired PTFE film obtained in the same manner as in Example 1 with a mean height of 250 µm, a diameter of 2 mm, and a spacing of 4 mm was drawn from a size of 70 mm × 70 mm to 203 mm × 500 mm under a predetermined temperature environment (230°C), and then further drawn from a size of 70 mm × 70 mm to 500 mm × 500 mm, thereby obtaining a porous membrane having a total drawing ratio of 1057 times.

### (Comparative Example 3)

An FP raw material of the porous membrane used for an air filter medium of Comparative Example 3 was a mixture prepared by mixing, at a weight ratio of 75:25, a fine powder (manufactured by Daikin Industries, Ltd., product name: F302) of perfluoroalkyl vinyl ether-modified polytetrafluoroethylene that is a copolymer of tetrafluoroethylene and perfluoroalkyl vinyl ether and a fine powder (manufactured by Daikin Industries, Ltd., product name: F106) of polytetrafluoroethylene having an average molecular weight of 6,500,000 to obtain a mixed powder, and mixing 29 parts by weight of an extrusion aid (liquid lubricant) with 100 parts by weight of the above mixed powder.

Then, the mixed powder was extruded using a paste extruder equipped with a sheet die to obtain a sheet-shaped molded body. The sheet-shaped molded body was molded into a film using calender rolls heated to 60°C to obtain a PTFE film. The resulting PTFE film was passed through a hot-air drying furnace at 190°C to evaporate and remove the hydrocarbon oil, thereby obtaining a belt-shaped unfired PTFE film (green tape) having a thickness of 300 µm and an average width of 170 mm. Subsequently, the unfired PTFE film was drawn from a size of 70 mm × 70 mm to 500 mm × 500 mm under a predetermined temperature environment (250°C), thereby obtaining a porous membrane of Comparative Example 3. An air filter medium of Comparative Example 3 was obtained in the same manner as in Example 1, except that the porous membrane of Comparative Example 3 was obtained in this manner.

### (Comparative Example 4)

An FP raw material of the porous membrane used for an air filter medium of Comparative Example 4 was a mixture prepared by mixing, at a weight ratio of 75:25, a fine powder (manufactured by Daikin Industries, Ltd., product name: F302) of perfluoroalkyl vinyl ether-modified polytetrafluoroethylene that is a copolymer of tetrafluoroethylene and perfluoroalkyl vinyl ether and a fine powder (manufactured by Daikin Industries, Ltd., product name: F106) of polytetrafluoroethylene having an average molecular weight of 6,500,000 to obtain a mixed powder, and mixing 28 parts by weight of an extrusion aid (liquid lubricant) with 100 parts by weight of the above mixed powder.

Then, the mixture was extruded using a paste extruder equipped with a sheet die to obtain a sheet-shaped molded body. The sheet-shaped molded body was molded into a film using calender rolls heated to 60°C to obtain a PTFE film. The resulting PTFE film was passed through a hot-air drying furnace at 190°C to evaporate and remove the hydrocarbon oil, thereby obtaining a belt-shaped unfired PTFE film (green tape) having a thickness of 300 µm and an average width of 160 mm. Subsequently, the unfired PTFE film was drawn from a size of 70 mm × 70 mm to 500 mm × 500 mm under a predetermined temperature environment (250°C), thereby obtaining a porous membrane of Comparative Example 4. An air filter medium of Comparative Example 4 was obtained in the same manner as in Example 1, except that the porous membrane of Comparative Example 4 was obtained in this manner.

### (Comparative Example 5)

An air filter medium of Comparative Example 5 was obtained in the same manner as in Example 1, except that the FP raw material of the porous membrane was changed from the FP raw material of the porous membrane of Example 1 to the following to obtain a porous membrane of Comparative Example 5.

Specifically, an FP raw material of the porous membrane used for the air filter medium of Comparative Example 5 was a mixed powder composed of three components (fibrillatable PTFE (A component), non-fibrillatable non-melt-fabricable component (B component), and non-fibrillatable melt-fabricable component having a melting point of lower than 320°C (C component)).

First, 66.5 wt% (in terms of polymer) of an aqueous PTFE dispersion (A component) having an SSG of 2.160 and produced in conformity to the method described in Comparative Example 3 of International Publication No. 2005/061567, 28.5 wt% (in terms of polymer) of an aqueous low-molecular-weight PTFE dispersion (B component) having a melt viscosity of 20000 Pa·s as measured by a flow tester method at 380°C and produced in conformity to the method described in International Publication No. 2009/020187, and 5 wt% (in terms of polymer) of an aqueous FEP dispersion (C component) having a melting point of 215°C and produced in conformity to the method described in Japanese Unexamined Patent Application Publication No. 2010-235667 were mixed, 500 ml of a 1% aqueous aluminum nitrate solution was added as a coagulant, and co-coagulation was performed by stirring. The resulting powder was strained through a strainer to remove water and then further dried in a hot-air drying furnace at 135°C for 18 hours to obtain a mixed powder of the above three components.

Subsequently, 33 parts by weight (33 parts by weight relative to 100 parts by weight of the mixed powder) of a hydrocarbon oil ("IP Solvent 2028" manufactured by Idemitsu Kosan Co., Ltd.) serving as an extrusion liquid lubricant was added to and mixed with 100 parts by weight of the mixture at 20°C. Then, the obtained mixture was extruded using a paste extruder to obtain a round-bar-shaped molded body. The round-bar-shaped molded body was molded into a film using calender rolls heated to 70°C to obtain a PTFE film. The resulting PTFE film was passed through a hot-air drying furnace at 190°C to evaporate and remove the hydrocarbon oil, thereby obtaining a belt-shaped unfired PTFE film (green tape) having an average thickness of 300 µm and an average width of 150 mm. Subsequently, the unfired PTFE film was drawn from a size of 70 mm × 70 mm to 500 mm × 500 mm under a predetermined temperature environment (250°C), thereby obtaining a porous membrane of Comparative Example 5. An air filter medium of Comparative Example 5 was obtained in the same manner as in Example 1, except that the porous membrane of Comparative Example 5 was obtained in this manner.

### (Comparative Example 6)

An air filter medium of Comparative Example 6 was obtained in the same manner as in Example 1, except that the FP raw material of the porous membrane was changed from the FP raw material of the porous membrane of Example 1 to the following to obtain a porous membrane of Comparative Example 6.

Specifically, an FP raw material of the porous membrane used for the air filter medium of Comparative Example 6 was a mixed powder composed of three components (fibrillatable PTFE (A component), non-fibrillatable non-melt-fabricable component (B component), and non-fibrillatable melt-fabricable component having a melting point of lower than 320°C (C component)).

First, 66.5 wt% (in terms of polymer) of an aqueous PTFE dispersion (A component) having an SSG of 2.160 and produced in conformity to the method described in Comparative Example 3 of International Publication No. 2005/061567, 28.5 wt% (in terms of polymer) of an aqueous low-molecular-weight PTFE dispersion (B component) having a melt viscosity of 20000 Pa·s as measured by a flow tester method at 380°C and produced in conformity to the method described in International Publication No. 2009/020187, and 5 wt% (in terms of polymer) of an aqueous FEP dispersion (C component) having a melting point of 215°C and produced in conformity to the method described in Japanese Unexamined Patent Application Publication No. 2010-235667 were mixed, 500 ml of a 1% aqueous aluminum nitrate solution was added as a coagulant, and co-coagulation was performed by stirring. The resulting powder was strained through a strainer to remove water and then further dried in a hot-air drying furnace at 135°C for 18 hours to obtain a mixed powder of the above three components.

Subsequently, 33 parts by weight (33 parts by weight relative to 100 parts by weight of the mixed powder) of a hydrocarbon oil ("IP Solvent 2028" manufactured by Idemitsu Kosan Co., Ltd.) serving as an extrusion liquid lubricant was added to and mixed with 100 parts by weight of the mixture at 20°C. Then, the obtained mixture was extruded using a paste extruder to obtain a round-bar-shaped molded body. The round-bar-shaped molded body was molded into a film using calender rolls heated to 70°C to obtain a PTFE film. The resulting film was passed through a hot-air drying furnace at 190°C to evaporate and remove the hydrocarbon oil, thereby obtaining a belt-shaped unfired PTFE film (green tape) having an average thickness of 300 µm and an average width of 150 mm. Subsequently, the unfired PTFE film was drawn from a size of 70 mm × 70 mm to 500 mm × 500 mm under a predetermined temperature environment (250°C), thereby obtaining a porous membrane of Comparative Example 6. An air filter medium of Comparative Example 6 was obtained in the same manner as in Example 1, except that the porous membrane of Comparative Example 6 was obtained in this manner.

### (Comparative Example 7)

An air filter medium of Comparative Example 7 was obtained in the same manner as in Example 1, except that the FP raw material of the porous membrane was changed from the FP raw material of the porous membrane of Example 1 to the following to obtain a porous membrane of Comparative Example 7, and that heating was finally performed for 60 seconds under an environment having an ambient temperature of 340°C.

Specifically, an FP raw material of the porous membrane used for the air filter medium of Comparative Example 7 was a mixture obtained by mixing a predetermined amount (29 parts by weight) of an extrusion aid (liquid lubricant) with 100 parts by weight of homo-PTFE that is a fine powder (manufactured by Daikin Industries, Ltd., product name: F106) of polytetrafluoroethylene having an average molecular weight of 6,500,000.

Then, the mixture was extruded using a paste extruder equipped with a sheet die to obtain a sheet-shaped molded body. The sheet-shaped molded body was molded into a film using calender rolls heated to 70°C to obtain a PTFE film. The resulting film was passed through a hot-air drying furnace at 200°C to evaporate and remove the extrusion aid, thereby obtaining a belt-shaped unfired PTFE film (green tape) having a predetermined average thickness (300 µm) and an average width of 100 mm. Subsequently, the unfired PTFE film was drawn from a size of 70 mm × 70 mm to 250 mm × 240 mm under a predetermined temperature environment (250°C), and then further drawn from a size of 70 mm × 70 mm to 500 mm × 500 mm, thereby obtaining a porous membrane of Comparative Example 7 having a total drawing ratio of 625 times. An air filter medium of Comparative Example 7 was obtained in the same manner as in Example 1, except that the porous membrane of Comparative Example 7 was obtained in this manner.

### (Comparative Example 8)

An air filter medium of Comparative Example 8 was obtained in the same manner as in Example 1, except that the FP raw material of the porous membrane was changed from the FP raw material of the porous membrane of Example 1 to the following to obtain a porous membrane of Comparative Example 8.

An FP raw material of the porous membrane used for the air filter medium of Comparative Example 8 was a mixture obtained by mixing a predetermined amount (32 parts by weight) of an extrusion aid (liquid lubricant) with 100 parts by weight of homo-PTFE that is a fine powder (manufactured by Daikin Industries, Ltd., product name: F106) of polytetrafluoroethylene having an average molecular weight of 6,500,000.

Then, the mixture was extruded using a paste extruder equipped with a sheet die to obtain a sheet-shaped molded body. The sheet-shaped molded body was molded into a film using calender rolls heated to 80°C to obtain a PTFE film. The resulting film was passed through a hot-air drying furnace at 190°C to evaporate and remove the extrusion aid, thereby obtaining a belt-shaped unfired PTFE film (green tape) having a predetermined average thickness (200 µm) and an average width of 135 mm. Then, the unfired PTFE film was longitudinally drawn in a longitudinal direction (MD direction) under a predetermined temperature environment (22°C) at a predetermined drawing ratio (12 times) and a predetermined drawing speed (50 m/min) using a heated three-roll drawing apparatus. Then, transverse drawing was performed in a width direction (TD direction) under a predetermined temperature environment (22°C) at a predetermined drawing ratio (40 times) and a predetermined drawing speed (30 m/min) using a tenter-type continuous drawing apparatus capable of continuous clipping, and heat setting was performed at a temperature of 390°C. Thus, a porous membrane of Comparative Example 8 was obtained. An air filter medium of Comparative Example 8 was obtained in the same manner as in Example 1, except that the porous membrane of Comparative Example 8 was obtained in this manner.

### (Comparative Example 9)

An air filter medium of Comparative Example 9 was obtained in the same manner as in Example 1, except that a glass filter medium (HB7633 of Hollingsworth & Vose) was used instead of the porous membrane of Example 1.

For the above Examples and Comparative Examples, the following physical properties were measured.

### (Thickness of porous membrane)

The thickness of a single membrane was determined by stacking five membranes to be measured, measuring the total thickness of the five membranes using a thickness meter (ID-C112CX, manufactured by Mitutoyo Corporation), and dividing the total thickness by 5.

### (Basis weight of porous membrane)

The basis weight was defined as a value determined by cutting a sample into a rectangle having a predetermined area, measuring the mass (g) of the cut sample using a precision balance, and dividing the mass by the area.

### (Geometric mean fiber diameter of porous membrane)

The surface of a test sample was photographed at a magnification of 4000× using a scanning electron microscope (SEM), a predetermined center line was drawn on each photographed image, and the thicknesses of images of fibers intersecting the center lines were measured as fiber diameters. The number of measured fibers was set to 100 or more. For the thus-obtained fiber diameters, a log-normal plot was produced by plotting fiber diameter on the horizontal axis and cumulative frequency on the vertical axis. A value at which the cumulative frequency was 50% was defined as a geometric mean fiber diameter. The geometric standard deviation representing a distribution of the fiber diameters was calculated from the result of the above log-normal plot by reading a fiber diameter at a cumulative frequency of 50% and a fiber diameter at a cumulative frequency of 84% and using the following formula. 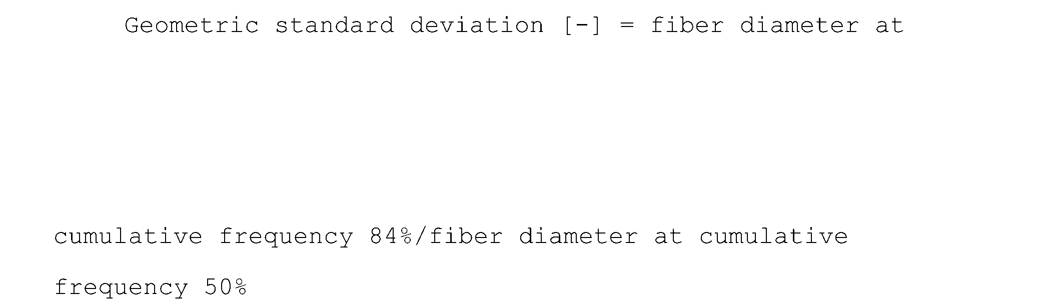 Geometric standard deviation [-] = fiber diameter at cumulative frequency 84%/fiber diameter at cumulative frequency 50%

### (Filling factor of porous membrane)

The filling factor of the porous membrane was determined in accordance with the following formula. 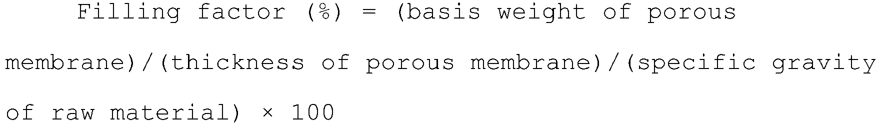 Filling factor (%) = (basis weight of porous membrane)/(thickness of porous membrane)/(specific gravity of raw material) × 100

Herein, the basis weight was defined as a value obtained by dividing, by an area (0.0048 m²), a mass (g) measured with a precision balance for a sample cut into a rectangle of 4.0 cm × 12.0 cm.

### (Fiber density of porous membrane)

The surface of a test sample was photographed at a magnification of 4000× using a scanning electron microscope (SEM), and the photographed image was subjected to a predetermined binarization process in order to reduce an influence of fibers at different depth positions. A predetermined center line was drawn on the binarized image data. The number of fibers on the center line was counted, and a line density was determined by dividing the counted number by a length of the center line of the binarized image data, thereby calculating the fiber density.

### (Fiber density/geometric mean fiber diameter of porous membrane)

The fiber density/geometric mean fiber diameter of the porous membrane was calculated by dividing the above fiber density of the porous membrane by the above geometric mean fiber diameter.

### (Pressure loss in air filter medium)

A measurement sample of the air filter medium was set in a filter holder having a diameter of 90 mm. The pressure on the inlet side was increased using a compressor, and the flow rate of air passing through the measurement sample was adjusted to 5.3 cm/s using a velocimeter. Then, the pressure loss at this time was measured with a differential pressure gauge.

### (Penetration rate of polyalphaolefin particles in air filter medium)

The penetration rate of polyalphaolefin (PAO) particles (liquid particles) was evaluated. That is, air containing PAO particles was passed through a sample filter medium having an effective filtration area of 50 cm² at a flow rate of 5.3 cm/s. The numbers of particles upstream and downstream of the filter medium as a measurement sample were determined using a particle counter, and the penetration rate was calculated from the following formula. $Penetration rate \left(%\right) = \left(CO/CI\right) \times 100$ $Collection efficiency \left(%\right) = 100 - penetration rate \left(%\right)$ $\begin{matrix}CO = number of polyalphaolefin particles on downstream \\ side of measurement sample\end{matrix}$ 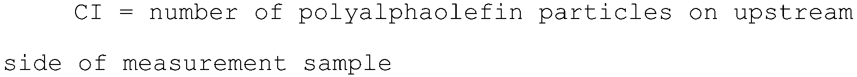 CI = number of polyalphaolefin particles on upstream side of measurement sample

The PAO particles were PAO particles generated using a Laskin nozzle (number median diameters: 0.06 µm, 0.1 µm, 0.15 µm, 0.2 µm, and 0.3 µm), and the concentration of the PAO particles was set to about 1,000,000 to 6,000,000 particles/cm³.

The penetration rate for each particle diameter was plotted on a graph, MPPS (most penetrating particle size) was determined from an approximate curve, and the penetration rate at the MPPS was determined.

### (PF value of polyalphaolefin particles in air filter medium)

Based on the pressure loss and the collection efficiency (collection efficiency for polyalphaolefin particles) of the air filter medium, the PF values were determined in accordance with the following formula for each particle diameter of polyalphaolefin and for MPPS. $PF value = \left\{-log\left(\left(\begin{matrix}100 - collection efficiency \\ \left(%\right)\end{matrix}\right)/100\right)\right\} / \left(pressure loss \left(Pa\right)/1000\right)$

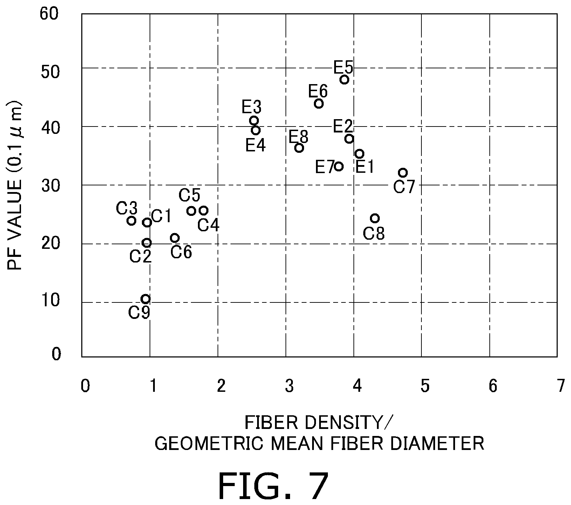

The physical properties of the air filter media and the porous membranes of Examples and Comparative Examples are shown in Tables 1, 2, and 3 below. Fig. 7 is also a graph of PF values for a particle diameter of 0.1 µm with respect to the fiber density/geometric mean fiber diameter of the porous membrane.

**[Table 1]**

| | | Example 1 | Example 2 | Example 3 | Example 4 | Example 5 | Example 6 |
|---|---|---|---|---|---|---|---|
| Thickness of porous membrane | (µm) | 27 | 20 | 25 | 45 | 21 | 35 |
| Basis weight of porous membrane | (g/m²) | 1.45 | 1.37 | 1.13 | 1.40 | 1.83 | 1.80 |
| Geometric mean fiber diameter | (µm) | 0.098 | 0.113 | 0.104 | 0.107 | 0.117 | 0.113 |
| Filling factor of porous membrane | (%) | 2.4 | 3.1 | 2.1 | 1.4 | 4.0 | 2.3 |
| Fiber density | (fibers/µm) | 0.40 | 0.44 | 0.26 | 0.27 | 0.45 | 0.39 |
| Fiber density/Geometric mean fiber diameter | (fibers/µm²) | 4.1 | 3.9 | 2.5 | 2.5 | 3.8 | 3.5 |
| Pressure loss | (Pa) | 164 | 112 | 112 | 109 | 146 | 74 |
| Penetration rate (%) | 0.06 µm particles | 0.00014 | 0.00458 | 0.00196 | 0.00336 | 0.00002 | 0.03773 |
| | 0.10 µm particles | 0.00013 | 0.00506 | 0.00215 | 0.00436 | 0.00001 | 0.04860 |
| | 0.15 µm particles | 0.00020 | 0.00125 | 0.00054 | 0.00119 | 0.00000 | 0.01889 |
| | 0.20 µm particles | 0.00000 | 0.00025 | 0.00011 | 0.00023 | | 0.00605 |
| | 0.30 µm particles | | 0.00001 | 0.00000 | 0.00001 | | 0.00050 |
| | MPPS particles | 0.00017 | 0.00604 | 0.00285 | 0.00525 | | 0.05182 |
| PF value | 0.06 µm particles | 36 | 39 | 42 | 41 | 46 | 46 |
| | 0.10 µm particles | 36 | 38 | 42 | 40 | 49 | 45 |
| | 0.15 µm particles | 40 | 44 | 47 | 45 | 53 | 50 |
| | 0.20 µm particles | 45 | 50 | 53 | 52 | | 57 |
| | 0.30 µm particles | | 64 | 69 | 67 | | 71 |
| | MPPS particles | 35.0 | 38 | 41 | 39 | | 44 |

**[Table 2]**

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|
| Thickness of porous membrane | (µm) | 130 | 140 | 179 | 178 | 171 | 184 | 8 | 7 | 470 |
| Basis weight of porous membrane | (g/m²) | 5.67 | 6.60 | 6.02 | 5.48 | 7.86 | 8.47 | 1.32 | 1.30 | 82.85 |
| Geometric mean fiber diameter | (µm) | 0.213 | 0.213 | 0.120 | 0.127 | 0.122 | 0.143 | 0.098 | 0.099 | 0.330 |
| Filling factor of porous membrane | (%) | 1.7 | 1.9 | 1.5 | 1.4 | 2.1 | 2.1 | 7.5 | 9.0 | 7.1 |
| Fiber density | (fibers/µm) | 0.20 | 0.20 | 0.09 | 0.23 | 0.19 | 0.19 | 0.46 | 0.42 | 0.30 |
| Fiber density/Geometric mean fiber diameter | (fibers/µm²) | 0.9 | 0.9 | 0.7 | 1.8 | 1.6 | 1.3 | 4.7 | 4.3 | 0.9 |
| Pressure loss | (Pa) | 13 | 16 | 95 | 65 | 181 | 218 | 228 | 174 | 309 |
| Penetration rate (%) | 0.06 µm particles | 39.74280 | 39.24415 | 0.34758 | 1.37603 | 0.00142 | 0.00119 | 0.00000 | 0.00628 | 0.01844 |
| | 0.10 µm particles | 49.17700 | 47.20141 | 0.51997 | 2.06539 | 0.00211 | 0.00269 | 0.00000 | 0.00548 | 0.06837 |
| | 0.15 µm particles | 52.28911 | 49.51234 | 0.29785 | 1.46481 | 0.00069 | 0.00081 | 0.00000 | 0.00146 | 0.07525 |
| | 0.20 µm particles | 54.12279 | 59.58836 | 0.15766 | 0.98187 | 0.00014 | 0.00022 | | 0.00020 | 0.05368 |
| | 0.30 µm particles | 55.87827 | 48.75877 | 0.03578 | 0.36830 | 0.00001 | 0.00001 | | 0.00001 | 0.01974 |
| | MPPS particles | 55.51974 | 50.20060 | 0.49577 | 1.94995 | 0.00220 | 0.00233 | 0.00001 | 0.00740 | |
| PF value | 0.06 µm particles | 31 | 25 | 26 | 29 | 27 | 23 | 32 | 24 | 12 |
| | 0.10 µm particles | 24 | 20 | 24 | 26 | 26 | 21 | 32 | 25 | 10 |
| | 0.15 µm particles | 22 | 19 | 26 | 28 | 28 | 23 | 35 | 28 | 10 |
| | 0.20 µm particles | 21 | 19 | 29 | 31 | 32 | 26 | | 33 | 11 |
| | 0.30 µm particles | 20 | 19 | 36 | 37 | 40 | 32 | | 40 | 12 |
| | MPPS particles | 20 | 18 | 24 | 26 | 26 | 21 | 32 | 24 | |

**[Table 3]**

| | | Example 7 | Example 8 |
|---|---|---|---|
| Thickness of porous membrane | (µm) | 12.7 | 21.2 |
| Basis weight of porous membrane | (g/m²) | 0.886 | 1.020 |
| Geometric mean fiber diameter | (µm) | 0.115 | 0.118 |
| Filling factor of porous membrane | (%) | 7.0 | 4.8 |
| Fiber density | (fibers/µm) | 0.43 | 0.38 |
| Fiber density/Geometric mean fiber diameter | (fibers/µm²) | 3.8 | 3.2 |
| Pressure loss | (Pa) | 158 | 138 |
| Penetration rate (%) | 0.10 µm particles | 0.00059 | 0.00087 |
| | 0.30 µm particles | 0.00001 | 0.00001 |
| PF value | 0.10 µm particles | 33.1 | 36.7 |
| | 0.30 µm particles | 43.9 | 52.3 |

### (Appendix)

Although embodiments of the present disclosure have been described above, it will be understood that various changes in form and details can be made without departing from the gist and scope of the present disclosure as set forth in the claims.

### Reference Signs List

1 air filter unit
20 filter pack
25 frame body
30a, 30b, 30c, 30d air filter medium
21 air-permeable support member
21a upstream air-permeable support member
21b downstream air-permeable support member
21c intermediate air-permeable support member
31 porous membrane
31a first porous membrane
31b second porous membrane

### Citation List

### Patent Literature

PTL 1: Japanese Unexamined Patent Application Publication No. 10-030031

## Claims

1. An air filter medium (30a, 30b, 30c, 30d) comprising a porous membrane (31, 31a, 31b) having fibers,
wherein a fiber density/geometric mean fiber diameter that is a ratio of a fiber density in the porous membrane to a geometric mean fiber diameter of the fibers in the porous membrane is 1.9 or more and 4.2 or less.

2. The air filter medium according to claim 1, wherein the geometric mean fiber diameter of the fibers in the porous membrane is 98 nm or more.

3. The air filter medium according to claim 1 or 2, wherein the geometric mean fiber diameter of the fibers in the porous membrane is 199 nm or less.

4. The air filter medium according to any one of claims 1 to 3, wherein the fiber density in the porous membrane is 0.45 fibers/µm or less.

5. The air filter medium according to any one of claims 1 to 4, wherein the fiber density in the porous membrane is 0.26 fibers/µm or more.

6. The air filter medium according to any one of claims 1 to 5, wherein the porous membrane is a fluororesin porous membrane.

7. The air filter medium according to claim 6, wherein the fluororesin porous membrane includes a homo-PTFE and a modified PTFE.

8. The air filter medium according to claim 6 or 7, wherein the fluororesin porous membrane has a PF value of 35 or more, the PF value being defined by formula PF value = {-log((100 - collection efficiency (%))/100)}/(pressure loss (Pa)/1000) using a pressure loss determined when air is passed at a flow rate of 5.3 cm/s and a collection efficiency for polyalphaolefin particles with a particle diameter of 0.1 µm determined when air containing the polyalphaolefin particles is passed at a flow rate of 5.3 cm/s.

9. The air filter medium according to any one of claims 6 to 8, wherein the geometric mean fiber diameter of the fibers in the fluororesin porous membrane is 117 nm or less.

10. The air filter medium according to any one of claims 6 to 9, wherein a filling factor in the fluororesin porous membrane is 1.4% or more and 4.0% or less.

11. The air filter medium according to any one of claims 6 to 10, wherein a basis weight in the fluororesin porous membrane is 1.1 g/m² or more.

12. The air filter medium according to any one of claims 6 to 11, wherein a thickness in the fluororesin porous membrane is 19 µm or more.

13. The air filter medium according to any one of claims 1 to 5, wherein the porous membrane is a polyolefin porous membrane.

14. The air filter medium according to claim 13, wherein the polyolefin porous membrane has a PF value of 32 or more, the PF value being defined by formula PF value = {-log((100 - collection efficiency (%))/100)}/(pressure loss (Pa)/1000) using a pressure loss determined when air is passed at a flow rate of 5.3 cm/s and a collection efficiency for polyalphaolefin particles with a particle diameter of 0.1 µm determined when air containing the polyalphaolefin particles is passed at a flow rate of 5.3 cm/s.

15. The air filter medium according to claim 13 or 14, wherein the geometric mean fiber diameter of the fibers in the polyolefin porous membrane is 120 nm or less.

16. The air filter medium according to any one of claims 13 to 15, wherein a filling factor in the polyolefin porous membrane is 4.0% or more and 8.0% or less.

17. The air filter medium according to any one of claims 13 to 16, wherein a basis weight in the polyolefin porous membrane is 0.8 g/m² or more.

18. The air filter medium according to any one of claims 13 to 17, wherein a thickness in the polyolefin porous membrane is 11 µm or more.
